# EUROPEAN PATENT SPECIFICATION

(11) **EP 2 135 696 B1**
(45) Date of publication and mention of the grant of the patent: **07.06.2017**
(21) Application number: 08739192.6
(22) Date of filing: 28.03.2008
(51) Int. Cl.: B23B 1/00, B23B 5/00, B23B 5/16, B23B 31/02

(54) **METHOD OF PROCESSING END OF ELONGATED TUBE MATERIAL**
VERFAHREN ZUR BEARBEITUNG VON LÄNGLICHEM ROHRMATERIAL
PROCÉDÉ DE TRAVAIL D'EXTRÉMITÉ D'UN MATÉRIAU TUBULAIRE ALLONGÉ

(30) Priority: 28.03.2007 JP 2007084670
(43) Date of publication of application: 23.12.2009
(73) Proprietor: Nippon Steel & Sumitomo Metal Corporation, Tokyo 100-8071 (JP)
(72) Inventor: ISHII, Kazuhiro, Osaka-shi Osaka 541-0041 (JP)
(74) Representative: Jackson, Martin Peter
(86) International application number: PCT/JP2008/056074
(87) International publication number: WO 2008/123415

(56) References cited:
- CA-A1- 2 243 940
- JP-A- 59 201 720
- JP-A- S59 201 720
- JP-A- 2006 167 852
- US-A- 5 174 179
- INOBE ET AL.: 'Hensoku Setsujo ni yoru Senban Nejikiri Kako no Bibiri Yokusei' NIPPON KIKAI GAKKAI RONBUNSHU (C-HEN) vol. 70, no. 693, May 2004, pages 1529 - 1534, XP008118140
- ISHIZU ET AL.: 'Yuseiyo Kokan Tsugite no Jido Kensa Sochi' HAIKAN GIJUTSU vol. 29, no. 12, October 1987, pages 100 - 109, XP008118141

## Description

### Technical Field

This invention relates to a method of thread cutting on an end portion of a long tubular member held by a chucking device according to the preamble of claim 1, the method being suitable for cutting with high accuracy of threads for a joint on the end portion of an oil country tubular good with or without a metal-to-metal sealing portion. The chuck system which is employed in the method may be a normal chuck system of the non-floating type or a floating chuck system having a floating chuck mechanism. Such a method is known from JP 64-6886 B.

### Background Art

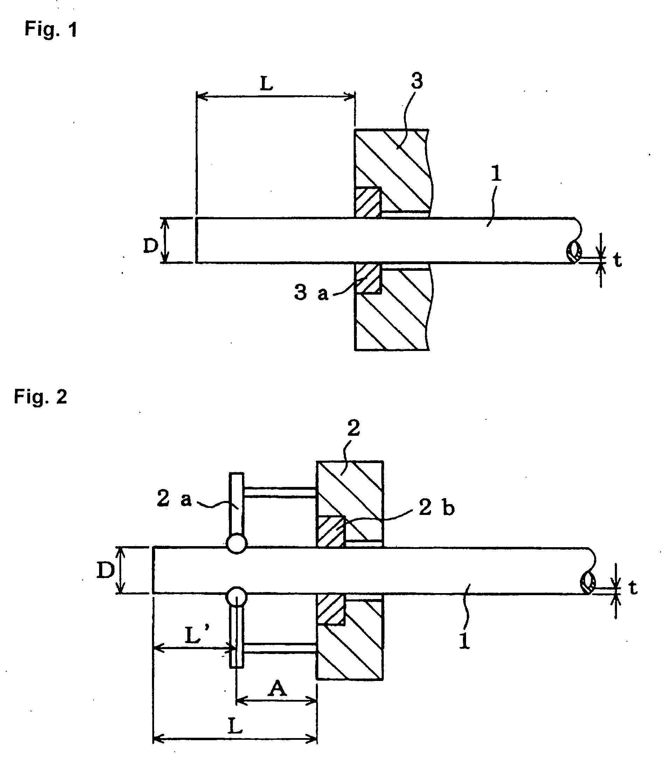

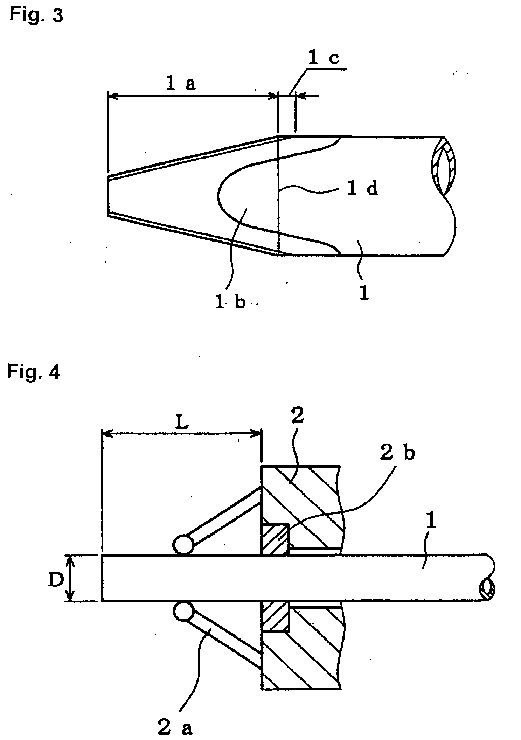

Oil country tubular goods (OCTG) used for excavation of oil wells or gas wells and for production of crude oil or natural gas are connected to each other during use by couplings. To this end, threads (typically tapered threads) for connection are formed on the end portions of tubular members. These threads require a high degree of gas tightness. Therefore, as shown in Figure 3, when cutting the threads on an end portion of an oil country tubular good 1, a high degree of accuracy of machining is required, and it is not permissible that mill scale 1b which indicates that no cutting is performed thereon remains on a complete thread portion 1a. In Figure 3, 1c indicates an incomplete thread portion, and 1d indicates the border between the complete thread portion 1a and the incomplete thread portion 1c.

Thread cutting on an end portion of a long tubular member such as an oil country tubular good is carried out by holding the tubular member in the vicinity of the end portion to be machined by means of a chuck, which is a rotatable workpiece-holding tool, then rotating the tubular member by rotating the chuck, and allowing the end portion of the rotating tubular member to be contacted with a cutting tool which can be adjusted in position relative to the tubular member.

An oil country tubular good is often formed from a long tubular member having a length of approximately 10 meters or more. There are also small-diameter tubular members referred to as tubing having an outer diameter of at most 114 mm. Such long tubular members have a slight amount of bending in the lengthwise direction. As the outer diameter and wall thickness of an oil country tubular good increase, its weight also increases and it is necessary for its joint to have a threaded portion with an increased length. The accuracy of machining decreases if the oil country tubular good is not accurately centered during thread cutting.

When performing thread cutting of an end portion of a long tubular member such as an oil country tubular good, a floating chuck system as shown in Figure 4, for example, is frequently used which has a positioning chuck which can move in the axial direction and in vertical (up and down) and horizontal (to the left and right) directions and a floating chuck which can move in vertical and horizontal directions. With the illustrated floating chuck system 2, a tubular member is first centered while it is held by a positioning chuck 2a in the position at the border 1 d between the complete thread portion 1a and the incomplete thread portion 1c which are to be formed on the tubular member. The tubular member is then held by the floating chuck 2b in a position closer to the midpoint of the tubular member than the border 1d, and centering is carried out again. The positioning chuck 2a is then released to accomplish holding of the long tubular member in position (see JP 64-6886 B).

When using a floating chuck system of this type, centering of a long tubular member is carried out at a position which corresponds to the position where the positioning chuck is located and which is closer to the tube end portion than when using a conventional chuck. As a result, the accuracy of centering is improved.

### Disclosure of Invention

However, no matter how accurately centering is performed, due to bending of the tubular member at the end portions, the resulting complete thread portion may sometimes have mill scale remaining thereon. Furthermore, due to rotation of the tubular member during machining, a centrifugal force acts on the floating chuck in such a direction that the chuck opens, and it is necessary to increase the holding pressure of the chuck to a certain extent to counteract the centrifugal force. An oil country tubular good which is held with such an increased pressure is deformed to assume an elliptical shape in the vicinity of the position where it is held. If the elliptical shape extends to the complete thread portion, mill scale remains on the complete thread portion.

The present invention provides a method which can perform highly accurate machining on an end portion of a long tubular member such as an oil country tubular good without leaving mill scale on a complete thread portion formed by thread cutting even when the end portion of the tubular member undergoes bending or becomes elliptical due to the holding pressure, whether using a floating chuck system or a conventional non-floating chuck system.

The present invention provides a method of thread cutting on an end portion of a long tubular member which has an outer diameter *D* and a wall thickness *t* and which is held by a chuck system, characterized by carrying out thread cutting while holding the long tubular member with the chuck system in a position such that the protruding length L of the end portion being machined of the long tubular member from the chuck system satisfying below-described (A) when the chuck system is of the non-floating type and satisfying below-described (B) when it is of the floating type:
(A) the chuck system is a non-floating chuck system having at least one chuck, and it holds the long tubular member in a position such that the ratio L/D of the protruding length L of the long tubular member, which is the distance from the chuck closest to the end portion being machined to the end face of the end portion being machined of the long tubular member, with respect to the outer diameter D of the tubular member is in the following range:
   (1) when the outer diameter *D* of the tubular member is less than 88.9 mm: if the ratio t/D of the wall thickness t to the outer diameter D of the long tubular member is at most 0.07, L/D is at least 3.0 and at most 4.5; and if t/D is greater than 0.07, L/D is at least 2.5 and at most 3.5;
   (2) when the outer diameter *D* of the tubular member is at least 88.9 mm and at most 139.7 mm: if t/D is at most 0.07, L/D is at least 2.0 and at most 3.5; and if t/D is greater than 0.07, L/D is at least 1.5 and at most 3.5; and
   (3) when the outer diameter *D* of the tubular member is greater than 139.7 mm: if t/D is at most 0.07, L/D is at least 1.5 and at most 2.5; and if t/D is greater than 0.07, L/D is at least 1.0 and at most 2.5;
(B) the chuck system is a floating chuck system having a floating chuck and in front of it a positioning chuck for centering, and it holds the long tubular member in a position such that the ratios L/D and L'/D of the protruding length *L* of the long tubular member, which is the distance from the floating chuck to the end face of the end portion being machined of the long tubular member, and the protruding length *L'* from the positioning chuck to the end face with respect to the outer diameter *D* of the long tubular member are in the following ranges:
   (1') when the outer diameter *D* of the tubular member is less than 88.9 mm: if the ratio t/D of the wall thickness t to the outer diameter *D* of the long tubular member is at most 0.07, L/D is at least 3.0 and L'/D is at most 3.0; and if t/D is greater than 0.07, L/D is at least 2.5 and L'/D is at most 3.0;
   (2') when the outer diameter *D* of the tubular member is at least 88.9 mm and at most 139.7 mm: if t/D is at most 0.07, L/D is at least 2.0 and L'/D is at most 2.0; and if t/D is greater than 0.07, L/D is at least 1.5 and L'/D is at most 2.0; and
   (3') when the outer diameter *D* is greater than 139.7 mm: if t/D is at most 0.07, L/D is at least 1.5 and L'/D is at most 1.5; and if t/D is greater than 0.07, L/D is at least 1.0 and L'/D is at most 1.5.

In above-described case (B) where a floating chuck system is used, it is preferable to use a floating chuck system for which the centering position of the positioning chuck is at most 200 mm from the floating chuck.

The term "long tubular member" as used herein means a tubular member with a length of at least 8 meters. A preferred length of a long tubular member for which the effects of the present invention are more pronounced is at least 10 meters.

The term "chuck", when used by itself, means a holding chuck of the non-floating (rigid) type which cannot move vertically (up and down) or horizontally (to the left and right). The term "floating chuck" means a holding chuck which can move vertically and horizontally. The term "positioning chuck" means a chuck which is used for centering and released after centering and which has its axis movable vertically and horizontally.

When machining an end portion of a long tubular member according to the present invention, the projecting length of the long tubular member from a chuck is controlled so as to be in an optimal range. As a result, the end portion can be machined with high accuracy, and mill scale does not remain on a complete thread portion when thread cutting is carried out even when the end portion undergoes bending or it is deformed into an elliptical shape under a large holding pressure.

A method according to the present invention is ideal for use in thread cutting on an end portion of an oil country tubular good, but it is not limited to this use. The present invention can be applied to any type of thread cutting of an end portion of a long tubular member. Namely, a long tubular member is not limited to an oil country tubular good, and it may also be a line pipe or similar tubular member.

### Brief Explanation of the Drawings

Figure 1 is an explanatory view of an embodiment in which an end portion of a long tubular member held in the vicinity of the end portion is machined using a conventional chuck system having a rigid chuck.
Figure 2 is an explanatory view of another embodiment in which an end portion of a long tubular member held in the vicinity of the end portion is machined by a floating chuck system.
Figure 3 is an explanatory view of a mill scale defect which occurred in thread cutting on an end portion of a long tubular member.
Figure 4 is an explanatory view of centering using a floating chuck system.

### List of referential numbers:

1: tubular member, 1a: complete thread portion, 1b: mill scale, 1c: incomplete thread portion, 1d: border, 2: floating chuck system, 2a: positioning chuck, 2b: floating chuck, 3: rigid chuck system, 3a: front chuck

### Best Mode for Carrying Out the Invention

Below, the progress until the present invention has completed and examples of the best mode of the invention will be explained while referring to Figure 1 which illustrates a normal chuck of the non-floating type and to Figure 2 which illustrates a floating chuck.

The present inventors studied why mill scale sometimes remains on the complete thread portion when carrying out thread cutting on an end portion of a long tubular member and specifically an oil country tubular good, even when centering is accurately carried out using a floating chuck system.

The causes of mill scale remaining on a complete thread portion are swinging about of an end portion of a long tubular member due to bending of the end portion, and deformation of the portion of the tubular member held by a chuck system into an elliptical shape due to the holding pressure. Mill scale which remains due to bending of a tube end portion is present on the side of the complete thread portion closer to the tube end surface. In contrast, mill scale which remains due to deformation caused by the holding pressure of the chuck is present on the side of the complete thread portion closer to the portion being held by the chuck (the side closer to the midpoint of the tube longitudinal axis) as shown in Figure 3.

Of these causes, swinging about of an end portion of a long tubular member can be suppressed by reducing the distance (the protruding length) L from the end face of the tubular member to the end face of the chuck system which is holding the tubular member. As for the other cause, if the holding pressure exerted by the chuck system is too small, the holding force decreases and chatter develops at the time of machining. Therefore, a certain amount of deformation of the tubular member in the vicinity of the holding portion due to the holding pressure is unavoidable. The larger is the diameter of a tubular member and the smaller is its wall thickness, the greater is the deformation of the tubular member, and the greater is the effect of the deformation on the portion being machined.

Based on this knowledge, the present inventors carried out experiments which varied machining conditions. As a result, they found that when using a conventional chuck system of the non-floating type, there is an optimal range for the ratio L/D of the distance L from the end face of an end portion being machined of a long tubular member to the end face of the chuck of the chuck system closest to the end portion being machined (the distance by which the tubular member protrudes from the portion of the long tubular member held by a chuck at the time of machining) to the outer diameter D of the long tubular member.

The present inventors also found that when using a floating chuck system, there are optimal ranges for the ratios L/D and L'/D of the distance L from the end face of the long tubular member to the end face of a floating chuck and the distance *L'* from the end face of the long tubular member to a positioning chuck with respect to the outer diameter D.

Figure 1 is an explanatory view of an example of a method of machining an end portion of a long tubular member according to the present invention when using a conventional chuck system of the non-floating type. This figure shows cutting of prescribed threads on one end peripheral portion of a long tubular member 1 by a thread cutter.

3 is a usual chuck system provided on a thread cutter. When prescribed threads are cut on an end portion of the long tubular member 1, the chuck system 3 holds the long tubular member 1 with a front chuck 3a and a rear chuck (not shown) in a position away from the end portion being machined and with a prescribed spacing between these chucks, such as 2000 - 2500 mm. Both chucks are of the rigid type, namely, the location of the axis of each chuck in the vertical and horizontal directions cannot be adjusted. However, the position of each chuck in the axial direction may be adjustable by moving the chuck system or each chuck in the axial direction. The front chuck 3a is the chuck closest to the end portion being machined. The axial direction means the axial direction of the long tubular member.

Needless to say, an unillustrated cutting tool which can be adjusted in position relative to the long tubular member 1 is disposed to one side of one end portion of the long tubular member 1 held by the chuck system 3 (namely, the end portion of the tubular member protruding from the front chuck 3 a).

In the present invention, when cutting threads on an end portion of a long tubular member 1 which is held in the vicinity of the end portion by this type of conventional chuck system 3, the thread cutting is carried out while holding the long tubular member 1 with the chuck system 3 in a position such that the ratio L/D of the above-mentioned protruding length *L* to the outer diameter *D* is in the below-described ranges depending on the outer diameter *D* of the long tubular member 1 and the ratio t/D of the wall thickness *t* to the outer diameter *D.*
(1) For a long tubular member 1 having an outer diameter *D* of less than 88.9 mm,
   (1-1) When t/D (wall thickness/outer diameter ratio) is at most 0.07: L/D is at least 3.0 and at most 4.5;
   (1-2) When t/D is greater than 0.07: L/D is at least 2.5 and at most 3.5;
(2) For a long tubular member 1 having an outer diameter *D* of at least 88.9 mm and at most 139.7 mm,
   (2-1) When t/D is at most 0.07: L/D is at least 2.0 and at most 3.5;
   (2-2) When t/D is greater than 0.07: L/D is at least 1.5 and at most 3.5;
(3) For a long tubular member 1 having an outer diameter D greater than 139.7 mm:
   (3-1) When t/D is at most 0.07: L/D is at least 1.5 and at most 2.5;
   (3-2) When t/D is greater than 0.07: L/D is at least 1.0 and at most 2.5.

When a long tubular member is mounted on the chuck system 3 and is held by the front chuck 3a and the unillustrated rear chuck, the protruding length L of the long tubular member 1 can be adjusted such that L/D is in the above-described ranges by adjusting the length by which the tubular member protrudes from the front chuck 3a. Additionally or alternatively, if the chuck system 3 or the front chuck 3a is movable in the axial direction, the protruding length *L* of the tubular member 1 can be adjusted by this movement such that L/D is in the above-described ranges.

Figure 2 shows an example of the use of a floating chuck system 2. The floating chuck system 2 includes a positioning chuck 2a which is used for centering prior to machining and a floating chuck 2b which can adjust the position at which it holds a long tubular member during machining (the position of the chuck in the tube axial direction) in both vertical and horizontal directions. The floating chuck 2b may also be movable in the axial direction by movement of the chuck system 2 or by movement of the floating chuck 2b itself in the axial direction. Although not shown in the drawings, a rigid rear chuck is normally disposed to the rear of the floating chuck 2b (towards the midpoint of the tubular member). In the illustrated floating chuck system, in contrast to the floating chuck system 2 shown in Figure 4, the centering position of the positioning chuck 2a can be adjusted in the axial direction of the tubular member. This adjustment is carried out by extending or retracting axially extending arms 2a' of the positioning chuck 2a from the body of the chuck system 2 by hydraulic pressure, for example.

During the use of a floating chuck system 2, a long tubular member 1 is held in a position such that the ratios L/D and L'/D of the distance L (the protruding length of the tubular member during machining) from the end face of the end portion being machined of the long tubular member 1 to the end face of the floating chuck 2b and the distance *L*'(the protruding length of the tubular member at the time of centering) from the end face of the long tubular member 1 to the centering position of the positioning chuck 2a (a location at the center of the positioning chuck) with respect to the outer diameter *D* of the tubular member 1 are in the following ranges.
(1') For a long tubular member 1 having an outer diameter *D* of less than 88.9 mm,
   (1'-1) When t/D (thickness/outer diameter ratio) is at most 0.07: L/D is at least 3.0 and L'/D is at most 3.0;
   (1'-2) When t/D is greater than 0.07: L/D is at least 2.5 and L'/D is at most 3.0;
(2') For a long tubular member 1 having an outer diameter D of at least 88.9 mm and at most 139.7 mm,
   (2'-1) When t/D is at most 0.07: L/D is at least 2.0 and L'/D is at most 2.0.
   (2'-2) When t/D is greater than 0.07: L/D is at least 1.5 and L'/D is at most 2.0;
(3') For a long tubular member 1 having an outer diameter *D* greater than 139.7 mm:
   (3'-1) When t/D is at most 0.07: L/D is at least 1.5 and L'/D is at most 1.5;
   (3'-2) When t/D is greater than 0.07: L/D is at least 1.0 and L'/D is at most 1.5.

In the case of a floating chuck, the upper limit on the protruding length of the tubular member 1 is prescribed by the ratio L'/D, so there is no particular upper limit on L/D.

The protruding length *L* of a tubular member 1 from a floating chuck 2b can be adjusted in the same manner as described above with respect to a conventional chuck system. The protruding length *L*' from the positioning chuck 2a (namely, the amount of protrusion from the centering position of the chuck) can be adjusted by changing the position of the positioning chuck 2a in the axial direction.

In the present invention, the reason why the optimal ranges for the ratios L/D and L'/D of the protruding lengths *L* and *L'* of the tubular member to the outer diameter *D* are varied in accordance with the outer diameter *D* and the wall thickness *t* of the long tubular member 1 is because the larger is the outer diameter *D* and the smaller is the wall thickness *t,* the greater is the amount of deformation caused by the holding pressure of the chuck system 2 or 3, and the deformed portion may extend into the region being machined.

The reasons why the ratios L/D and L'/D of the protruding lengths *L* and *L'* of a tubular member to the outer diameter *D* are in the above-described ranges in the present invention are as follows.

If L/D is smaller than the lower limit, the projecting length of the long tubular member 1 is insufficient, and when the tubular member is held by a front chuck 3a or a floating chuck 2b, deformation caused by the holding pressure reaches the complete thread portion which undergoes thread cutting, and mill scale remains on a portion of the complete thread portion and particularly on the side closer to the midpoint of the tube. On the other hand, if L/D is greater than the upper limit, the protruding length of the tubular member 1 becomes too large, and due to bending of the end portion, mill scale remains on part of the complete thread portion which is formed and particularly toward the end of the tube.

When using a floating chuck system 2, the centering position of the positioning chuck 2a is preferably at most 200 mm from the floating chuck 2b. Namely, in Figure 2, the distance A from the centering position of the positioning chuck 2b (the center of this chuck) and the end face of the floating chuck 2a is preferably at most 200 mm. A preferred embodiment of the present invention also provides a floating chuck system 2 in which the centering position of the positioning chuck 2a is at most 200 mm from the floating chuck 2b. If the centering position of the floating chuck 2a is greater than 200 mm from the floating chuck 2b, when the end of the long tubular member 1 undergoes a large amount of bending, the amount of swinging about of the floating chuck 2b increases, and vibrations of the floating chuck system 2 so increase that it becomes necessary to decrease the maximum rotational speed of the tubular member 1.

The floating chuck system 2 may be of the type shown in Figure 4 in which the position of the positioning chuck 2a cannot be moved in the axial direction (and accordingly the centering position is fixed). In this case as well, the chuck system is preferably designed such that the centering position of the positioning chuck 2a is at most 200 mm from the floating chuck 2b, and the long tubular member 1 can be held by the positioning chuck 2 such that L/D and L'/D are within the ranges of the present invention by adjusting the protruding length *L* of the long tubular member 1. However, if the centering position is fixed, depending upon the outer diameter *D* and the wall thickness *t* of a long tubular member, it may not always be possible to carry out the method of the present invention. Accordingly, it is preferable to use a floating chuck system of the type as shown in Figure 2 in which the position of a positioning chuck 2a is movable in the axial direction such that the centering position of an elongated member 1 can be changed.

The manner how a long tubular member 1 is e held by a floating chuck system 2, i.e., how the chuck system is operated may be the same as described above with respect to the prior art. The end to be machined of a long tubular member 1 is inserted into the chuck system. At this time, the position of the positioning chuck 2a comes at the position of the border (1d in Figure 3) between the complete thread portion and the incomplete thread portion of the threads which are to be formed on an end portion of the tubular member, and the protruding length *L* of the tubular member 1 from the floating chuck 2b and the protruding length L'of the tubular member 1 from the positioning chuck 2a are made to satisfy L/D and L'/D prescribed by the present invention. If necessary, the axial positions of the positioning chuck 2a, the chuck system 2, and/or the floating chuck 2b are adjusted.

The tubular member 1 is held by an unillustrated rigid rear chuck and the positioning chuck 2a, and the positioning chuck 2a is moved vertically and horizontally in order to perform centering of the tubular member 1 at the border between the complete thread portion and the incomplete thread portion. Subsequently, the floating chuck 2b grips the tubular member 1, after it is moved vertically and horizontally as required. Upon release of the positioning chuck 2a, centering of the tubular member 1 is achieved. Thread cutting is then performed on the peripheral surface of the end portion of the tubular member 1 which is held by the rear chuck and the floating chuck 2b such that the protruding lengths *L* and *L'* have prescribed values.

### Examples

In order to ascertain the effects of the present invention, long tubular members having an outer diameter *D* (nominal outer diameter) of 73.0 mm, 114.3 mm, or 177.8 mm (each having a length of 10 meters with bending of the end of the tubular member being at most 3.0 mm per 300 mm) were held using the chuck system 2 or 3 shown in Figure 1 or Figure 2, and API threads were cut on one end portion of each tubular member. For each outer diameter *D*, tubular members having two different wall thicknesses *t* were prepared, and machining was carried out while varying the protruding lengths *L* and *L'* of the tubular members for different values of t/D.

An example of the results is shown in Table 1 and Table 2. Table 1 shows the results using the conventional chuck system 3 of Figure 1 which does not have a floating chuck, and Table 2 shows the results using the floating chuck system 2 of Figure 2. The underlined values for L/D and L'/D are values outside the ranges of the present invention.

If the holding pressure of the front chuck 3a (Figure 1) or the floating chuck 2b (Figure 2) in a machining test is too small, the holding force decreases and chatter develops at the time of machining. Therefore, the holding pressure was set in the range of 20 - 40 kgf/cm² so that chatter would not develop and so that the amount of deformation would not become large.

The results of the machining test were evaluated in terms of mill scale defects and elliptical defects after machining.

Mill scale defects were evaluated by visually determining the percentage of the area of a complete thread portion on which mill scale was present. The case in which mill scale was present on at least 5% of the area was given mark "X" (poor), and the case in which mill scale was present on less than 5% of the area was given mark "O" (good).

Elliptical defects were evaluated by measuring the maximum diameter and the minimum diameter around the entire periphery of the portion of the tubular member 1 held by the chuck and calculating the value of ellipticity as [(maximum diameter - minimum diameter) x 100] / nominal outer diameter. Elliptical defects were evaluated as poor (X) when the value of ellipticity was 5% or larger and as good (O) when it was less than 5%.

The overall evaluation of a tubular member was "O" (good) when the evaluations for both mill scale defects and elliptical defects were "O" and was "X" (poor) when at least one evaluation was "X".

**Table 1**

| | | | | | | | | | | | | | | | | | | |
|---|---|---|---|---|---|---|---|---|---|---|---|---|---|---|---|---|---|---|
| Tube outer diameter *D* (mm) | 73.0 | | | | | | 114.3 | | | | | | 177.8 | | | | | |
| Tube wall thickness *t* (mm) | 4.60 | | | 5.51 | | | 6.88 | | | 9.65 | | | 9.19 | | | 14.99 | | |
| t/D (-) | 0.06 | | | 0.08 | | | 0.06 | | | 0.08 | | | 0.05 | | | 0.08 | | |
| Protruding length L (mm) | 225 | 345 | 195 | 195 | 345 | 165 | 255 | 415 | 215 | 215 | 415 | 165 | 335 | 475 | 255 | 255 | 475 | 165 |
| L/D (-) | 3.1 | 4.7 | 2.7 | 2.7 | 4.7 | 2.3 | 2.2 | 3.6 | 1.9 | 1.9 | 3.6 | 1.4 | 1.9 | 2.7 | 1.4 | 1.4 | 2.7 | 0.9 |
| Elliptical defects | O | O | X | O | O | X | O | O | X | O | O | X | O | O | X | O | O | X |
| Mill scale defects | O | X | O | O | X | O | O | X | O | O | X | O | O | X | O | O | X | O |
| Overall evaluation | O | X | X | O | X | X | O | X | X | O | X | X | O | X | X | O | X | X |

**Table 2**

| | | | | | | | | | | | | | | | | | | |
|---|---|---|---|---|---|---|---|---|---|---|---|---|---|---|---|---|---|---|
| Tube outer diameter *D* (mm) | 73.0 | | | | | | 114.3 | | | | | | 177.8 | | | | | |
| Tube wall thickness *t* (mm) | 4.60 | | | 5.51 | | | 6.88 | | | 9.65 | | | 9.19 | | | 14.99 | | |
| t/D (-) | 0.06 | | | 0.08 | | | 0.06 | | | 0.08 | | | 0.05 | | | 0.08 | | |
| Protruding length *L* (mm) | 225 | 345 | 195 | 195 | 345 | 165 | 255 | 415 | 215 | 215 | 415 | 165 | 335 | 475 | 255 | 255 | 475 | 165 |
| Protruding length *L'*(mm) | 110 | 230 | 80 | 80 | 230 | 50 | 140 | 300 | 100 | 100 | 300 | 50 | 180 | 320 | 100 | 100 | 320 | 10 |
| L/D (-) | 3.1 | 4.7 | 2.7 | 2.7 | 4.7 | 2.3 | 2.2 | 3.6 | 1,9 | 1.9 | 3.6 | 1.4 | 1.9 | 2.7 | 1.4 | 1.4 | 2.7 | 0.9 |
| L'/D (-) | 1.5 | 3.2 | 1.1 | 1.1 | 3.2 | 0.7 | 1.2 | 2.6 | 0.9 | 0.9 | 2.6 | 0.4 | 1.0 | 1.8 | 0.6 | 0.6 | 1.8 | 0.1 |
| Elliptical defects | O | O | X | O | O | X | O | O | X | O | O | X | O | O | X | O | O | X |
| Mill scale defects | O | X | O | O | X | O | O | X | O | O | X | O | O | X | O | O | X | O |
| Overall evaluation | O | X | X | O | X | X | O | X | X | O | X | X | O | X | X | O | X | X |

From Table 1 and Table 2, it can be seen that by holding a long tubular member by a chuck system and machining an end portion of the tube according to the present invention, bending and elliptical deformation are suppressed, and the occurrence of mill scale or elliptical defects can be suppressed to less than 5%.

Embodiments of the present invention have been explained, but the present invention is not limited to these embodiments, and various modifications can be made within the scope of the appended claims.

## Claims

1. A method of thread cutting on an end portion of a long tubular member which has an outer diameter *D* and a wall thickness *t* and which is held by a chuck system, **characterized by** carrying out thread cutting while holding the long tubular member with the chuck system in a position such that the protruding length *L* of the end portion being machined of the long tubular member from the chuck system satisfying below-described (A) when the chuck system is of the non-floating type and satisfying below-described (B) when it is of the floating type:
(A) the chuck system is a non-floating chuck system having at least one chuck, and it holds the long tubular member in a position such that the ratio L/D of the protruding length *L* of the long tubular member, which is the distance from the chuck closest to the end portion being machined to the end face of the end portion being machined of the long tubular member, with respect to the outer diameter *D* of the tubular member is in the following range:
(1) when the outer diameter *D* of the tubular member is less than 88.9 mm: if the ratio t/D of the wall thickness *t* to the outer diameter *D* of the long tubular member is at most 0.07, L/D is at least 3.0 and at most 4.5; and if t/D is greater than 0.07, L/D is at least 2.5 and at most 3.5;
(2) when the outer diameter D of the tubular member is at least 88.9 mm and at most 139.7 mm: if t/D is at most 0.07, L/D is at least 2.0 and at most 3.5; and if t/D is greater than 0.07, L/D is at least 1.5 and at most 3.5; and
(3) when the outer diameter *D* of the tubular member is greater than 139.7 mm: if t/D is at most 0.07, L/D is at least 1.5 and at most 2.5; and if t/D is greater than 0.07, L/D is at least 1.0 and at most 2.5;
(B) the chuck system is a floating chuck system having a floating chuck and in front of it a positioning chuck for centering, and it holds the long tubular member in a position such that the ratios L/D and L'/D of the protruding length *L* of the long tubular member, which is the distance from the floating chuck to the end face of the end portion being machined of the long tubular member, and the protruding length *L'* from the positioning chuck to the end face with respect to the outer diameter *D* of the long tubular member are in the following ranges:
(1') when the outer diameter D of the tubular member is less than 88.9 mm: if the ratio t/D of the wall thickness *t* to the outer diameter *D* of the long tubular member is at most 0.07, L/D is at least 3.0 and L'/D is at most 3.0; and if t/D is greater than 0.07, L/D is at least 2.5 and L'/D is at most 3.0;
(2') when the outer diameter *D* of the tubular member is at least 88.9 mm and at most 139.7 mm: if t/D is at most 0.07, L/D is at least 2.0 and L'/D is at most 2.0; and if t/D is greater than 0.07, L/D is at least 1.5 and L'/D is at most 2.0; and
(3') when the outer diameter D is greater than 139.7 mm: if t/D is at most 0.07, L/D is at least 1.5 and L'/D is at most 1.5; and if t/D is greater than 0.07, L/D is at least 1.0 and L'/D is at most 1.5.

2. A method of thread cutting an end portion of a long tubular member as set forth in claim 1, wherein the centering position of the positioning chuck is located at most 200 mm from the floating chuck.

## Patentansprüche

1. Verfahren zum Gewindeschneiden auf einem Endabschnitt eines Langrohrteils, das einen Außendurchmesser D und eine Wanddicke t hat und das durch ein Spannfuttersystem gehalten wird, **gekennzeichnet durch** Durchführen des Gewindeschneidens, während das Langrohrteil mit dem Spannfuttersystem in einer Position so gehalten wird, dass die Kraglänge L des bearbeiteten Endabschnitts des Langrohrteils vom Spannfuttersystem (A) gemäß der nachstehenden Beschreibung erfüllt, wenn das Spannfuttersystem vom nicht schwimmenden Typ ist, und (B) gemäß der nachstehenden Beschreibung erfüllt, wenn es vom schwimmenden Typ ist:
(A) das Spannfuttersystem ist ein nicht schwimmendes Spannfuttersystem mit mindestens einem Spannfutter, und es hält das Langrohrteil in einer solchen Position, dass das Verhältnis L/D der Kraglänge L des Langrohrteils, das der Abstand vom Spannfutter, das am nächsten zum bearbeiteten Endabschnitt liegt, zur Endfläche des bearbeiteten Endabschnitts des Langrohrteils im Hinblick auf den Außendurchmesser D des Rohrteils ist, im folgenden Bereich liegt:
(1) bei einem Außendurchmesser D des Rohrteils von weniger als 88,9 mm: ist das Verhältnis t/D der Wanddicke t zum Außendurchmesser D des Langrohrteils höchstens 0,07, so ist L/D mindestens 3,0 und höchstens 4,5; und ist t/D größer als 0,07, so ist L/D mindestens 2,5 und höchstens 3,5;
(2) bei einem Außendurchmesser D des Rohrteils von mindestens 88,9 mm und höchstens 139,7 mm: ist t/D höchstens 0,07, so ist L/D mindestens 2,0 und höchstens 3,5; und ist t/D größer als 0,07, so ist L/D mindestens 1,5 und höchstens 3,5; und
(3) bei einem Außendurchmesser D des Rohrteils von mehr als 139,7 mm: ist t/D höchstens 0,07, so ist L/D mindestens 1,5 und höchstens 2,5; und ist t/D größer als 0,07, so ist L/D mindestens 1,0 und höchstens 2,5;
(B) das Spannfuttersystem ist ein schwimmendes Spannfuttersystem mit einem schwimmenden Spannfutter und vor ihm einem Positionierspannfutter zum Zentrieren, und es hält das Langrohrteil in einer solchen Position, dass die Verhältnisse L/D und L`/D der Kraglänge L des Langrohrteils, die der Abstand vom schwimmenden Spannfutter zur Endfläche des bearbeiteten Endabschnitts des Langrohrteils ist, und der Kraglänge L' vom Positionierspannfutter zur Endfläche im Hinblick auf den Außendurchmesser D des Langrohrteils in den folgenden Bereichen liegen:
(1') bei einem Außendurchmesser D des Rohrteils von weniger als 88,9 mm: ist das Verhältnis t/D der Wanddicke t zum Außendurchmesser D des Langrohrteils höchstens 0,07, so ist L/D mindestens 3,0 und L'/D ist höchstens 3,0; und ist t/D größer als 0,07, so ist L/D mindestens 2,5 und L'/D höchstens 3,0;
(2') bei einem Außendurchmesser D des Rohrteils von mindestens 88,9 mm und höchstens 139,7 mm: ist t/D höchstens 0,07, so ist L/D mindestens 2,0 und L'/D ist höchstens 2,0; und ist t/D größer als 0,07, so ist L/D mindestens 1,5 und L'/D höchstens 2,0; und
(3') bei einem Außendurchmesser D über 139,7 mm: ist t/D höchstens 0,07, so ist L/D mindestens 1,5 und L'/D ist höchstens 1,5; und ist t/D größer als 0,07, so ist L/D mindestens 1,0 und L'/D höchstens 1,5.

2. Verfahren zum Gewindeschneiden eines Endabschnitts eines Langrohrteils nach Anspruch 1, wobei die Zentrierposition des Positionierspannfutters höchstens 200 mm vom schwimmenden Spannfutter liegt.

## Revendications

1. Procédé de filetage sur une partie d'extrémité d'un élément tubulaire long qui possède un diamètre extérieur *D* et une épaisseur de parois *t* et qui est maintenu par un système de mandrin, **caractérisé par** l'exécution d'un filetage tout en maintenant l'élément tubulaire long avec le système de mandrin dans une position de sorte que la longueur de dépassement *L* de la partie d'extrémité usinée de l'élément tubulaire long depuis le système de mandrin satisfasse le (A) décrit ci-dessous lorsque le système de mandrin est de type non-flottant, et satisfasse le (B) décrit ci-dessous lorsqu'il est de type flottant :
(A) le système de mandrin est un système de mandrin non-flottant ayant au moins un mandrin, et maintient l'élément tubulaire long dans une position de sorte que le rapport L/D de la longueur de dépassement *L* de l'élément tubulaire long, qui est la distance entre le mandrin le plus proche de la partie d'extrémité usinée et la face d'extrémité de la partie d'extrémité usinée de l'élément tubulaire long, par rapport au diamètre extérieur *D* de l'élément tubulaire, se trouve dans les limites suivantes :
(1) lorsque le diamètre extérieur *D* de l'élément tubulaire est inférieur à 88,9 mm : si le rapport t/D entre l'épaisseur de parois *t* et le diamètre extérieur *D* de l'élément tubulaire long est tout au plus de 0,07, L/D est au moins égal à 3 et tout au plus égal à 4,5 ; et si t/D est supérieur à 0,07, L/D est au moins égal à 2,5 et tout au plus égal à 3,5 ;
(2) lorsque le diamètre extérieur *D* de l'élément tubulaire est au moins égal à 88,9 mm et tout au plus égal à 139,7 mm : si t/D est tout au plus égal à 0,07, L/D est au moins égal à 2 et tout au plus égal à 3,5 ; et si t/D est supérieur à 0,07, L/D est au moins égal à 1,5 et tout au plus égal à 3,5 ; et
(3) lorsque le diamètre *D* de l'élément tubulaire est supérieur à 139,7 mm : si t/D est tout au plus égal à 0,07, L/D est au moins égal à 1,5 et tout au plus égal à 2,5 ; et si t/D est supérieur à 0,07, L/D est au moins égal à 1 et tout au plus égal à 2,5 ;
(B) le système de mandrin est un système de mandrin flottant ayant un mandrin flottant et, face à celui-ci, un mandrin de positionnement destiné au centrage, et maintient l'élément tubulaire long dans une position de sorte que les rapports L/D et L'/D entre la longueur de dépassement *L* de l'élément tubulaire long, qui est la distance entre le mandrin flottant et la face d'extrémité de la partie d'extrémité usinée de l'élément tubulaire long, et la longueur de dépassement *L*'entre le mandrin de positionnement et la face d'extrémité par rapport au diamètre extérieur *D* de l'élément tubulaire long se trouvent dans les limites suivantes :
(1') lorsque le diamètre extérieur *D* de l'élément tubulaire est inférieur à 88,9 mm : si le rapport t/D entre l'épaisseur de parois *t* et le diamètre extérieur *D* de l'élément tubulaire long est tout au plus égal à 0,07, L/D est au moins égal à 3 et L'/D est tout au plus égal à 3 ; et si t/D est supérieur à 0,07, L/D est au moins égal à 2,5 et L'/D est tout au plus égal à 3;
(2') lorsque le diamètre extérieur *D* de l'élément tubulaire est au moins égal à 88,9 mm et tout au plus égal à 139,7 mm : si t/D est tout au plus égal à 0,07, L/D est au moins égal à 2 et L'/D est tout au plus égal à 2 ; et si t/D est supérieur à 0,07, L/D est au moins égal à 1,5 et L'/D est tout au plus égal à 2 ; et
(3') lorsque le diamètre extérieur *D* est supérieur à 139,7 mm : si t/D est tout au plus égal à 0,07, L/D est au moins égal à 1,5 et L'/D est tout au plus égal à 1,5 ; et si t/D est supérieur à 0,07, L/D est au moins égal à 1 et L'/D est tout au plus égal à 1,5.

2. Procédé de filetage d'une partie d'extrémité d'un élément tubulaire long selon la revendication 1, dans lequel la position de centrage du mandrin de positionnement se trouve tout au plus à 200 mm du mandrin flottant.
